# EUROPÄISCHE PATENTSCHRIFT

(11) **EP 2 762 611 B1**
(45) Veröffentlichungstag und Bekanntmachung des Hinweises auf die Patenterteilung: **11.09.2019**
(21) Anmeldenummer: 14153515.3
(22) Anmeldetag: 31.01.2014
(51) Int. Cl.: C23G 1/36, C23G 3/00, C01F 7/34, C01F 7/14, C25D 21/06, C25D 21/12, C25D 21/18, C25D 11/16, C25D 11/08, C25D 11/00

(54) **Verfahren zum Aufbereiten eines Beiz- und Eloxalbades und Eloxieranordnung**
Method for conditioning a pickling bath and anodising bath and anodising assembly
Procédé de préparation d'un bain de décapage et d'un bain d'anodisation et système d'anodisation

(30) Priorität: 31.01.2013 DE 102013101005; 04.02.2013 DE 102013101093; 02.08.2013 DE 102013108375
(43) Veröffentlichungstag der Anmeldung: 06.08.2014
(73) Patentinhaber: König, Thomas, 88167 Maierhöfen (DE)
(72) Erfinder: König, Thomas, 88167 Maierhöfen (DE)
(74) Vertreter: Winter, Brandl, Fürniss, Hübner, Röss, Kaiser, Polte - Partnerschaft mbB

(56) Entgegenhaltungen:
- WO-A2-2010/060408
- DE-A1- 19 710 563
- JP-A- 2001 192 867
- US-A- 5 512 129

## Beschreibung

Die Erfindung betrifft ein Verfahren zum Aufbereiten eines Beiz- und eines Eloxalbades sowie eine Eloxieranordnung, die nach dem erfindungsgemäßen Verfahren betreibbar ist.

Vor der elektrolytischen Oxidation von Werkstücken aus Aluminium oder Aluminiumlegierungen (Eloxierung) oder vor der Weiterbearbeitung derartiger Werkstücke ist eine Oberflächenvorbehandlung erforderlich. Bei dieser werden die Werkstücke beispielsweise entfettet, gebeizt, gespült und dekapiert. Durch das Beizen soll eine gleichmäßige matte Werkstückoberfläche erzielt werden, wobei Oberflächenfehler wie beispielsweise Ziehriefen ausgeglichen werden. Eine derartige matte, vergleichsweise dekorative Oberfläche wird nach DIN EN12373 auch als E6-Finish bezeichnet. Bei geringeren Anforderungen an die äußere Anmutung werden lediglich vorhandene Oxidschichten entfernt, wobei die oben genannten Zieh- oder Pressriefen weitgehend erhalten bleiben - eine derartige Oberflächenqualität wird auch als E0-Finisch bezeichnet.

Werkstücke aus Aluminium und Aluminiumlegierungen werden in Eloxalwerken überwiegend mit stark alkalischen (pH>14) Beizlösungen gebeizt. Während des Beizvorgangs von Aluminiumlegierungen werden aus der Oberfläche der Werkstücke neben Aluminium auch verschiedene Schwermetalle freigesetzt. Diese Schwermetalle reichern sich in der Beizlösung an, welche negative Auswirkungen auf den Beizprozess haben können. Um das zu verhindern, werden der Beizlösung verschiedene Additive (z.B. Natriumsulfid oder Natriumthiosulfat) zugegeben und dadurch gelöste Schwermetalle (insbesondere Zink) in schwerlösliche Verbindungen überführt. Diese Verbindungen bilden feinpartikuläre Phasen (schwarzfarbige Trübstoffe) in der Beizlösung und verursachen weitere Probleme beim Beizen, wie z.B. eine Verschlechterung des Ablaufverhaltens der Beizlösung und eine Abnahme der Beizqualität. Mit zunehmender Betriebszeit fallen diese Trübstoffe im Beizbad als Schlamm aus, der in regelmäßigen Zeitabständen abgepumpt und entsorgt werden muss. Um die Aluminiumkonzentration im Beizbad konstant (140 g/L bis 170 g/L, abhängig von den Betriebsbedingungen) zu halten, werden zudem Teilmengen der Beizlösung (Altlauge) abgelassen und durch Frischlauge ergänzt. Die Altlauge wird üblicherweise an Recyclingbetriebe abgegeben, die diese aufbereiten. Eine Neutralisation der Altlauge mit sauren Konzentraten (Altsäure aus dem Eloxalbad) in der betriebseigenen Abwasseranlage wird nur noch selten vorgenommen. Außerdem gelangen Schwermetalle aus Beizbädern durch Verschleppung in die Spülbäder. Die Abwässer aus Spülbädern werden in der betriebseigenen Abwasseranlage aufbereitet. Dabei entstehen Filterkuchen, die mit Schwermetallen belastet sind.

Nach heutigem Stand der Technik werden alkalische Beizlösungen, Schlämme und Filterkuchen zwecks Rückgewinnung von Aluminium oder Natronlauge aufbereitet. Dabei kann gemäß der Lehre der DE 197 03 348 A1 Aluminium entweder als festes Aluminiumhydroxid abgeschieden oder, wie in der WO 94/24050 A1 gezeigt, als Natriumaluminatlösung zurückgewonnen und als Wertstoff zur Verfügung gestellt werden. Die Natronlauge kann aus den alkalischen Beizlösungen gemäß der EP 1 995 351 A1 mit Hilfe von Elektrodialyse oder nach der EP 0 968 322 B1 mittels Nanofiltration zurückgewonnen und wieder zum Beizen verwendet werden.

Während der Aufbereitung werden die alkalischen Beizlösungen, Schlämme und Filterkuchen nur in einzelnen Fällen von Schwermetallen befreit. Beispielsweise werden schwermetallhaltige Partikel durch Sedimentation oder mit Hilfe eines Anschwemmfilters abgeschieden. Zur Erleichterung der Fest-Flüssig-Trennung. werden, wie in der WO 94/24050 A1 vorgeschlagen, vereinzelt Flockungsmittel zugesetzt.

Die bei der Aufbereitung von alkalischen Beizlösungen, Schlämmen und Filterkuchen hergestellten schwermetallhaltigen Nebenprodukte (Niederschläge und Schlämme) enthalten neben den Schwermetallen auch Aluminium, Natronlauge und Badadditive in hohen Konzentrationen. Diese schwermetallhaltigen Nebenprodukte müssen als Sonderabfall entsorgt werden. Bei der Entsorgung werden hohe Verluste nicht nur an Schwermetallen, sondern auch an Natronlauge, Aluminium und Badadditiven verursacht, wodurch die Umwelt unnötig belastet wird. Außerdem fallen bei dem Prozess hohe Entsorgungskosten an.

Die Beizbadadditive wirken sich negativ auf die Stabilität der Natriumaluminatlösung aus. Dies lässt sich damit erklären, dass die Zuckerderivate zum einen zur Keimbildung neigen und zum anderen die Löslichkeitsgrenze von Aluminium verschlechtert.

Ebenfalls negativen Einfluss auf die Stabilität der Beizlösung hat die Fällung der Schwermetalle im Beizbad, was sich durch die hierbei bedingte gemeinsame Fällung mehrerer Metalle erklären lässt. Dieses Phänomen ist in der Abwassertechnik hinreichend bekannt. Es verschieben sich die Restlöslichkeiten der schwieriger fällbaren Metalle (in diesem Falle Aluminium) zu niedrigeren Werten. Diese Löslichkeitsverminderung wird umso mehr verstärkt, je höher die Ausgangskonzentration des anderen Metalles ist. Der Fällungs-pH-Bereich von Aluminium (ca. pH 4,5 bis pH 8,5) erweitert sich dadurch und Aluminium fällt bereits bei höheren pH-Werten aus. Ursachen für dieses Verhalten können sein: Bildung von Mischkristallen, Verbindungsbildung, Adsorptionseffekte.

Auch die Abwässer der Spülbäder werden üblicherweise firmeneigenen Abwasseraufbereitungsanlagen zugeführt. In einigen Unternehmen wird das saure Abwasser mit einer Kalkmilchlösung behandelt, in anderen wird das Abwasser sauer direkt mit dem Abwasser alkalisch vermengt. Im ersten Fall muss bei der Neutralisation wiederum zusätzlich Säure hinzugefügt werden, um eine Neutralisation ausführen zu können und es entsteht zusätzlicher Schlamm durch den Kalkmilcheinsatz. Bei der Neutralisation entsteht ein mit Schwermetallen verunreinigter Schlamm, welcher in einer Filterpresse entfeuchtet wird, damit der entstehende Filterkuchen dann als Abfall entsorgt werden kann. Auch hier kommt es zu immensen Kosten, die durch den zusätzlichen Einsatz der Kalkmilchlösung dann auch noch eine Säurezudosierung erfordern.

In der Druckschrift DE 197 10 563 A1 wird ein Verfahren zum Betreiben von Fräsbädern beschrieben, bei dem ein zu fräsendes metallisches Werkstück in ein NaOH-haltiges Fräsbad eingetaucht und durch eine chemische Reaktion zwischen Metall und dem Fräsbad oxidiert wird. Das entstandene Gemisch wird getrennt, wobei ein Gemisch aus gelöstem komplexiertem Metallion und Fräsbad entnommen und nanofiltriert wird. Das NaOH-haltige Fräsmedium wird unter Anwendung umgekehrter Osmose vom Gemisch abgetrennt.

In der JP 2001 192867 A ist eine Vorrichtung zur Aufbereitung einer schwefelsauren Eloxierbadlösung und einer natronlaugehaltigen Beizbadlösung offenbart, wobei eine aus einem Eloxalbad abgezogene Teilmenge Umkehrosmoseeinheiten zugeführt wird. Die nach der Umkehrosmose anfallenden Phasen werden gemeinsam mit einer aus dem Beizbad abgezogenen alkalischen Phase neutralisiert und dabei entstehendes Aluminiumhydroxid einer Weiterverwendung zugeführt werden kann.

In der WO 2010/060408 A2 des Anmelders ist ein Beizverfahren und eine Beizanlage offenbart, bei der die Aufkonzentrierung von Schwermetallen in dem Beizbad verhindert wird, indem eine Teilmenge des Beizbades abgezogen und mittels einer Feststofftrennung/Feststoffabscheidung Feststoffe von der abgezogenen Teilmenge getrennt werden. Die Zusammensetzung des verbleibenden feststoffarmen Permeats wird analysiert und die Permeatzusammensetzung in Abhängigkeit vom Ergebnis dieser Analyse eingestellt. Anschließend wird Permeat aus dieser Dosiervorlage wieder zurück in das Beizbad geführt, so dass die darin enthaltene Beizlösung auf einer vorbestimmten Zusammensetzung gehalten wird.

Auf diese Weise wird ein Anfall von Schlamm am Boden des Beizbades zuverlässig verhindert oder vermindert, so dass ein Langzeitbeizen mit hoher Effizienz ermöglicht wird.

Während des Eloxierens (Anodisieren von Aluminium) überlagert sich mit dem Aufbau einer Oxidschicht deren Rücklösung. Dadurch reichert sich der Elektrolyt entsprechend mit Aluminium an. Beim Gleichstrom-Schwefelsäure-Anodisieren von Aluminium sollten die Konzentrationen von Aluminium im Bereich von 5 bis 15 g/l gehalten werden. Höhere Konzentrationen erhöhen u.a. den Stromverbrauch beim Anodisieren. Um die Konzentration im Bereich um 10 g/l zu halten, muss regelmäßig eine Teilerneuerung des Elektrolyten erfolgen. Dabei wird eine entsprechende Menge des Elektrolyten abgelassen, welche beispielsweise als Konzentratabfall an einen Entsorger abgegeben wird. Das Bad wird mit frischer Schwefelsäure und Wasser entsprechend ergänzt. Stand der Technik zur Konstanthaltung von Aluminium im Eloxalbad ist der Einsatz einer Retardation. Hier erfolgt die Beladung einer Harzsäule mit dem Eloxalelektrolyten. Dann wird mit Wasser der Elektrolyt aus der Harzsäule wieder ausgewaschen. Dadurch, dass die Schwefelsäure die Säule aufgrund der Anlagerung an das Harz zeitlich verzögert (=retardiert) passiert und das Aluminium (Aluminiumsulfat) ohne Verzögerung das Harzbett verlässt, ergeben sich unterschiedliche Phasen. Die dadurch entstehende 1. aluminiumreiche und säurearme Phase wird bevorzugt einer Abwasserbehandlung zugeführt. Die 2.säurereiche und aluminiumarme Phase wird ins Eloxalbad zurückgeführt. Nachteilig ist, dass hier ein Abfallstrom vorhanden ist, durch den große Schlammmengen in der Abwasserbehandlungsanlage entstehen. Der zusätzliche Bedarf von Wasser zum Ausspülen der Harzsäule ergibt einen Verdünnungseffekt. Ein Rückführen von Spülwässern ins Prozessbad ist deshalb nicht möglich, da die zugeführte Menge an Wasser der Abwassermenge entspricht und somit keine Volumenabnahme im Prozessbad erfolgt.

Aufgabe der Erfindung ist es, ein Verfahren zum Aufbereiten eines Beiz- und eines Eloxalbades sowie eine Eloxieranordnung zur Durchführung dieses Verfahrens zu schaffen, durch die es ermöglicht ist, bei der Aufbereitung anfallende Wertstoffe einer weiteren Nutzung zuzuführen.

Diese Aufgabe wird im Hinblick auf das Verfahren durch die Merkmalskombination des Patentanspruches 1 und im Hinblick auf die Eloxieranordnung durch die Merkmalskombination des nebengeordneten Patentanspruches 6 gelöst.

Vorteilhafte Weiterbildungen der Erfindung sind Gegenstand der Unteransprüche.

Bei dem erfindungsgemäßen Verfahren zum Aufbereiten eines alkalischen Beizundeines sauren Eloxalbades wird jeweils zunächst eine Teilmenge des mit Aluminiumverbindungen angereicherten Bades (Beizbad, Eloxalbad) abgezogen. Die abgezogenen Teilmengen werden jeweils einem Nanofilter zugeführt, in dem eine Auftrennung in eine aluminiumarme Phase und eine aluminiumreiche Phase erfolgt.

In einem weiteren Schritt wird in jedem Zweig (Beizbad, Eloxalbad) aus der aluminiumreichen Phase durch Ausfällen eine aluminiumhydroxidreiche Phase abgetrennt. Diese ist je nach Bad (Beizbad, Eloxalbad) sauer oder alkalisch.

Von dieser alkalischen oder sauren aluminiumhydroxidreichen Phase wird jeweils mittels einer Fest-Flüssig-Trennung Aluminiumhydroxid abgetrennt und die verbleibende Lösung, bei dem Eloxalbad beispielsweise H₂SO₄ (Schwefelsäure) und beim Beizbad NaOH (Natronlauge) zum jeweiligen Bad zurückgeführt. Das jeweils bei der Fest-Flüssig-Trennung anfallende Aluminiumhydroxid ist je nach Prozess alkalisch oder sauer und wird anschließend neutralisiert. Dieses Neutralisieren kann beispielsweise durch Neutralspülen oder Auswaschen erfolgen. Das in jedem Zweig anfallende, neutralisierte Aluminiumhydroxid wird dann in einem gemeinsamen Trockner getrocknet und als Wertstoff einer weiteren Verwendung zugeführt.

Diese erfindungsgemäße Aufbereitung der Badlösung durch die Schritte Filtrieren, Ausfällen, Fest-Flüssig-Trennen, Neutralspülen und Trocknen erfolgt erfindungsgemäß sowohl zur Aufbereitung des Beizbades als auch zur Aufbereitung des Eloxalbades, wobei bei beiden Verfahrenszweigen der gleiche Wertstoff - Aluminiumhydroxid - anfällt.

Dieses Verfahren ermöglicht es, auf die eingangs genannten Beizadditive wie beispielsweise Gluconat, Sorbit oder andere Derivate aus der Zuckerchemie zu verzichten, die als Komplexbildner zugefügt wurden, um eine Steinbildung bei Vorhandensein von Aluminiumhydroxid zu verhindern. Bei dem erfindungsgemäßen Verfahren kann es erforderlich sein, die Konzentration an (freier) Natronlauge im jeweiligen Beizbad etwas zu erhöhen. Dies stellt jedoch keinerlei Problem dar, da beim erfindungsgemäßen Verfahren aus der Beizlösung nach dem Filtrieren oder der Fest-Flüssig-Trennung die Natronlauge zurück gewonnen und dem Prozess wieder zugeführt werden kann.

Dementsprechend ist eine derartige Eloxieranordnung mit einer Beizanlage und einer Eloxalanlage ausgeführt, wobei jeder dieser Anlagen ein Nanofilter zum Filtrieren des in der betreffenden Anlage anfallenden, mit Aluminiumverbindungen angereicherten Bads zugeordnet ist. Des Weiteren hat die Eloxiereinheit für jeden Zweig eine Ausfälleinheit zum Ausfällen von Aluminiumhydroxid, eine nachgeschaltete Fest-Flüssig-Trenneinheit zum Trennen des Aluminiumhydroxids von der jeweiligen flüssigen Komponente (Beizlösung, Elektrolyt des Eloxalbades (auch Eloxalsäure, Eloxalektrolyt, Eloxallösung genannt)). Die Flüssigkomponente wird dann zum jeweiligen Prozess zurückgeführt.

Die erfindungsgemäße Eloxieranordnung hat des Weiteren einen Neutralisierer, in dem das alkalische oder saure Aluminiumhydroxid beispielsweise durch Spülen bzw. Auswaschen neutralisiert wird. Die Eloxieranordnung ist noch mit einem gemeinsamen Trockner zum Trocknen des in beiden Zweigen anfallenden Aluminiumhydroxids ausgeführt.

Die erfindungsgemäße Eloxieranordnung ermöglicht es, die Aufbereitung des jeweiligen Bades so durchzuführen, dass ein reines und weiterverwertbares Produkt (Aluminiumhydroxid) entsteht und die jeweilige Lösung (Beizlösung, Elektrolyt des Eloxalbades) wieder dem Prozess zurückführbar ist.

Wie erläutert, ist diese Aufbereitung sowohl dem Eloxalbad als auch dem Beizbad zugeordnet.

Bei einem Ausführungsbeispiel der Erfindung erfolgt das Ausfällen der aluminiumhydroxidreichen Phase durch Bekeimen. Das Neutralisieren des Aluminiumhydroxids kann durch Auswaschen / Spülen erfolgen.

Wie erläutert, kann das Bad ein saures, vorzugsweise schwefelsäurehaltiges Eloxalbad sein, so dass die rückgeführte Flüssigkeitsphase der jeweilige Elektrolyt des Eloxalbades, insbesondere die Schwefelsäure ist.
Das erfindungsgemäße Verfahren und die erfindungsgemäße Eloxieranordnung sind jedoch nicht auf die Verwendung von Schwefelsäure begrenzt, sondern es können auch andere Säuren (Phosphorsäure, etc.) und Mischsäureelektrolyte Anwendung finden. Es muss auch nicht notwendigerweise ein schwefelsäurehaltiges Eloxalbad zum Einsatz kommen, sondern es kann auch ein säurehaltiges Bad sein, welches sich prozessbedingt mit Aluminium anreichert, bei dem das Aluminium dann abgetrennt bzw. recycelt werden soll. So kann anstelle eines schwefelsäurehaltigen Eloxalbads auch ein saures Bad - beispielweise ein Aluminium-Glänzbad - verwendet werden. Dieses Glänzbad besteht z.B. aus einem Phosphor-/Schwefelsäure-Gemisch. Bei dieser Anwendung wird die Aluminium-Oberfläche abgebeizt mit dem Ziel, eine glänzende Oberfläche zu erhalten. Es gibt elektrolytische und chemische Aluminium-Glänzbäder. Das heißt, bei einem derartigen Glänzbad handelt es sich um ein saures Beizbad, das auch erfindungsgemäß verwendet werden kann.

Die Gleichgewichtsreaktion bei der Verwendung von Phosphorsäure lautet dann:

ALPO₄ + 3H₂O ↔ AL(OH)3 + H₃PO₄

Dementsprechend wird bei der Aufbereitung der alkalischen, Natronlauge-haltigen Beizlösung, die vom Aluminiumhydroxid abgetrennte Lauge, ins Beizbad zurückgeführt.

Die Filtration zum Abtrennen der aluminiumreichen Phase ist eine Nanofiltration z.B. in einer Nanofiltrierstation.

Bei einem besonders bevorzugten Ausführungsbeispiel der Erfindung ist der beizbadseitigen Filtration eine Membranfiltration vorgeschaltet, in der die Beizlösung in ein schwermetallhaltiges Konzentrat und eine beizlauge(natronlauge)-haltige klare Phase getrennt wird. Die letztgenannte Phase wird dann der vorgenannten Filtration, insbesondere der Nanofiltration zugeführt. Die Schwermetalle können aufbereitet und als zusätzlich anfallende Wertstoffe einer weiteren Verwendung zugeführt werden.

Diese Abtrennung der Schwermetalle kann beispielsweise durch Sedimentation/Flotation und/oder Filtration, vorzugsweise Pressfiltration erfolgen. Dieser Filteranlage zum Trennen der schwermetallhaltigen Phase in die Schwermetalle und eine mit NaOH angereicherte Phase kann ein Zulauf für eine Waschflüssigkeit, beispielsweise Natronlauge zugeordnet sein, über die Natriumaluminat aus dem anfallenden Filterkuchen ausgewaschen werden kann. Die Anordnung kann des Weiteren mit einem Zulauf für Wasser oder dergleichen ausgeführt sein, so dass dann der Filterkuchen nach der Beaufschlagung mit der Waschflüssigkeit (vorzugsweise Natronlauge) neutral gespült werden kann.

Die bei dieser vorgeschalteten Membranfiltration anfallende klare Phase kann wieder in das Beizbad zurückgeführt werden. Selbstverständlich kann anstelle der Membranfiltration auch ein anderes Trennverfahren verwendet werden, um das schwermetallhaltige Konzentrat abzutrennen.

Dementsprechend muss die erfindungsgemäße Eloxieranordnung bei Verwendung dieser vorgeschalteten Schwermetallabscheidung mit einer geeigneten Filtereinheit
(Membranfilterstation) ausgeführt sein. Dieser Filtereinheit zugeordnet sind dann eine Sedimentation-/Flotationseinheit zur Abtrennung einer schwermetallhaltigen Phase vom Konzentrat und/oder eine Filteranlage zum Trennen des Konzentrates in die Schwermetalle und eine mit der Beizlösung angereicherte Phase, die entweder in das Beizbad zurückgeführt wird oder in der vorbeschriebenen Weise aufbereitbar ist.

Diese Filteranlage kann beispielsweise eine Pressfilterstation sein, der unter anderem zum Auswaschen des Filterkuchens NaOH zuführbar ist, um ein Ausfällen von Aluminiumhydroxid zu vermeiden.

Bei einem besonders bevorzugten Ausführungsbeispiel ist die Beizlösung ohne Komplexbildner, beispielsweise ohne Zuckerderivate oder glucosehaltige Additive ausgelegt, die herkömmlicher Weise zur Stabilisierung verwendet werden. Die Stabilisierung erfolgt erfindungsgemäß lediglich durch ausreichende Konzentration an freier Natronlauge. Die Stabilität wird durch die Reinheit der Beizlösung und Fällung der Schwermetalle außerhalb des Beizbades begünstigt.

Bei der Aufbereitung des säurehaltigen Eloxalbads kann der Filtration eine Retardation vorgeschaltet werden. Der Nanofiltration kann ein Vorfilter vorgeschaltet sein.

Bevorzugte Ausführungsbeispiele der Erfindung werden im Folgenden anhand schematischer Zeichnungen näher erläutert. Es zeigen:
Figur 1 ein stark vereinfachtes Anlagen-/Verfahrensschema einer Eloxieranordnung, die dazu ausgelegt ist, die erfindungsgemäße Aufbereitung der Bäder zu ermöglichen;
Figur 2 eine Pressstation einer Eloxieranordnung gemäß Figur 1 und
Figur 3 die Stabilitätskurven von Natriumaluminat / Aluminiumsulfat.

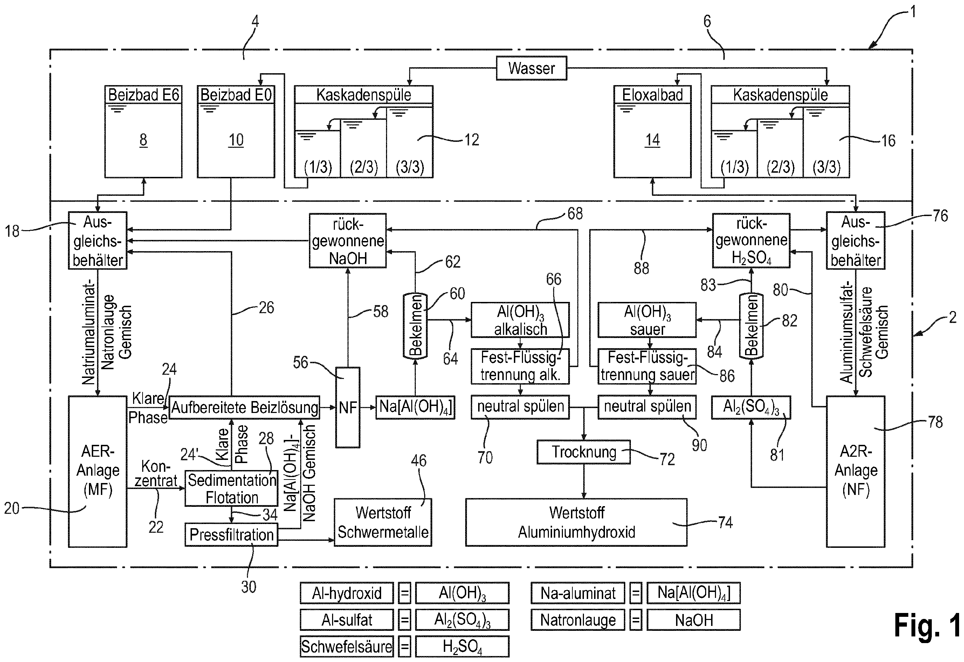

Im oberen Teil der Figur 1 ist der Grundaufbau eines Eloxierbetriebes, im Folgenden Eloxieranordnung 1 genannt, dargestellt. Durch das erfindungsgemäße Verfahren werden die im Eloxierbetrieb verwendeten Bäder (Beizbad, Eloxalbad) aufbereitet, so dass ein pH-neutraler Wertstoff (Aluminiumhydroxid) entsteht und die bei dieser Aufbereitung anfallende klare Phase zum jeweiligen Bad zurückgeführt werden kann. Diese Aufbereitung ist in der Darstellung gemäß Figur 1 mit dem Bezugszeichen 2 versehen.

Eine derartige Eloxieranordnung 1 hat im Prinzip eine Beizanlage 4 und/oder eine Eloxalanlage 6, wobei in der Beizanlage 4 eine Vorbehandlung des Werkstückes und in der Eloxieranlage 6 die eigentliche anodische Oxidation erfolgt.

Die Beizanlage 4 hat üblicherweise ein E6-Beizbad 8 und ein EO-Beizbad 10, über die, wie eingangs erläutert, eine Oberflächenvorbehandlung erfolgt, wobei im EO-Beizbad 10 die mechanisch oder chemisch nicht vorbehandelten Werkstücke derart gebeizt werden, dass die gewünschte oxidfreie Werkstückoberfläche erzielt wird. Bei höheren Anforderungen an die Oberflächenqualität kann das E6-Beizbad 8 verwendet werden, indem das ggf. mechanisch oder chemisch vorbehandelte Werkstück so vorbehandelt wird, dass eine matte Oberfläche entsteht, wobei Kratzer, Riefen usw. teilweise ausgeglichen werden. Die Beizlösung ist üblicherweise alkalisch, beim dargestellten Ausführungsbeispiel soll NaOH verwendet werden.

Die im jeweiligen Beizbad vorbehandelten Werkstücke werden dann in einer Kaskadenspüle 12 gespült, so dass ein Eintrag der Beizlösung in die eigentliche Eloxalanlage verhindert wird. Dieses Spülen kann beispielsweise durch Wasser oder dergleichen erfolgen. Beim dargestellten Ausführungsbeispiel sind drei Spülstufen vorgesehen.

Wie im Anlagenschema gemäß Figur 1 angedeutet, kann die einen relativ hohen NaOH-Gehalt aufweisende Spülflüssigkeit der ersten Spülstufe wieder in das E0-Beizbad 10 zurückgeführt werden.

Das beim Spülen anfallende Abwasser wird in nicht dargestellter Weise aufbereitet und dann wieder den Spülprozessen zugeführt.

Die in der Beizanlage 4 vorbehandelten und gespülten Werkstücke werden dann der Eloxalanlage 6 zugeführt. Diese hat ein Eloxalbad 14, in dem die anodische Oxidation des Werkstückes erfolgt. Als Elektrolyt wird eine saure Lösung, beispielsweise Schwefelsäure (H₂SO₄) verwendet.

Die beim Eloxieren durchlaufenen elektrochemischen Prozesse sind hinlänglich bekannt, so dass diesbezügliche Erläuterungen entbehrlich sind.

Nach dem Eloxieren hat das Werkstück eine vergleichsweise dünne Eloxalschicht, so dass es dauerhaft gegen Umwelteinflüsse geschützt ist. In dem Fall, dass bestimmten dekorativen Anforderungen genügt werden soll, kann diese Eloxalschicht noch durch einen weiteren Verfahrensschritt eingefärbt werden. Wie in Figur 1 angedeutet, wird nach dem Eloxieren (Anodisieren) das Werkstück gespült, wobei dieses Spülen wiederum dreistufig in einer weiteren Kaskadenspüle 16 durchgeführt werden kann. Auch bei diesem Spülvorgang ist es vorteilhaft, das Spülwasser mit ausgeschlepptem Elektrolyt aus der vergleichsweise hochkonzentrierten ersten Spülstufe (1/3) in das Eloxalbad 14 zurückzuführen, um Verluste von Eloxalsäure zu reduzieren.

Bis hierhin entspricht die Eloxieranordnung herkömmlichen Lösungen. Erfindungsgemäß werden die beim Beizen und beim Eloxieren anfallenden Betriebsfluide (Beizlösung, Elektrolyt) in der im Folgenden beschriebenen Weise aufbereitet.

Zunächst wird auf die Aufbereitung der Beizlösung eingegangen, die in den Beizbädern 8, 10 anfällt.

Die Beizbäder 8, 10 sind mit einem Niveau-Ausgleichsbehälter 18 (alkalisch) verbunden, so dass aus diesem aufbereitete Beizlösung, im vorliegenden Fall NaOH in das jeweilige Beizbad 8, 10 zurückgeführt werden kann. Diesem Ausgleichsbehälter 18 wird auch die mit Schwermetallen und Aluminium angereicherte Beizlösung zugeführt, die dann im Prinzip aus einer Natriumaluminat-Natronlauge-Mischung besteht. Diese mit Schwermetallen beladene Mischung wird in einem ersten Aufbereitungsschritt einer Filterstation zugeführt, die im vorliegenden Fall als Membranfiltereinheit 20 ausgeführt ist. In dieser wird das Gemisch in ein Schwermetallkonzentrat 22 und eine klare Phase 24 aufgetrennt. Die klare Phase 24 wird dann entweder gemäß dem mit dem Bezugszeichen 26 angedeuteten Stoffstrom zum Ausgleichsbehälter 18 zurückgeführt oder einer weiteren Vorbehandlung zugeführt. Das schwermetallhaltige Konzentrat 22 wird dann einer Sedimentations-/Flotationseinheit 28 zugeführt, in der ggf. noch eine Flockung zum Ausfällen der Schwermetalle durchgeführt wird. Die in dieser Einheit 28 abgetrennte klare Phase 24' wird dann entweder über die Stoffleitung 26 zum Ausgleichsbehälter 18 oder der im Folgenden erläuterten Nachbehandlung zugeführt. Die in der Einheit 28 anfallende schwermetallhaltige Phase wird dann einer Pressfiltration zugeführt. Es entsteht ein Filterkuchen ohne bzw. mit geringen Spuren von Natronlauge, Aluminium und ggf. sonstigen Beizadditiven, wobei, wie eingangs erläutert, keine Komplexbildner vorgesehen sein müssen. Bei der Pressfiltration in einer Pressfiltereinheit 30 fällt ein Natriumaluminat-Natronlauge-Gemisch an, das dann ebenfalls wieder über die Stoffleitung 26 zum Ausgleichsbehälter 18 (alkalisch) zurückgeführt werden kann oder aber, in bevorzugter Weise, der weiteren Aufbereitung zugeführt wird.

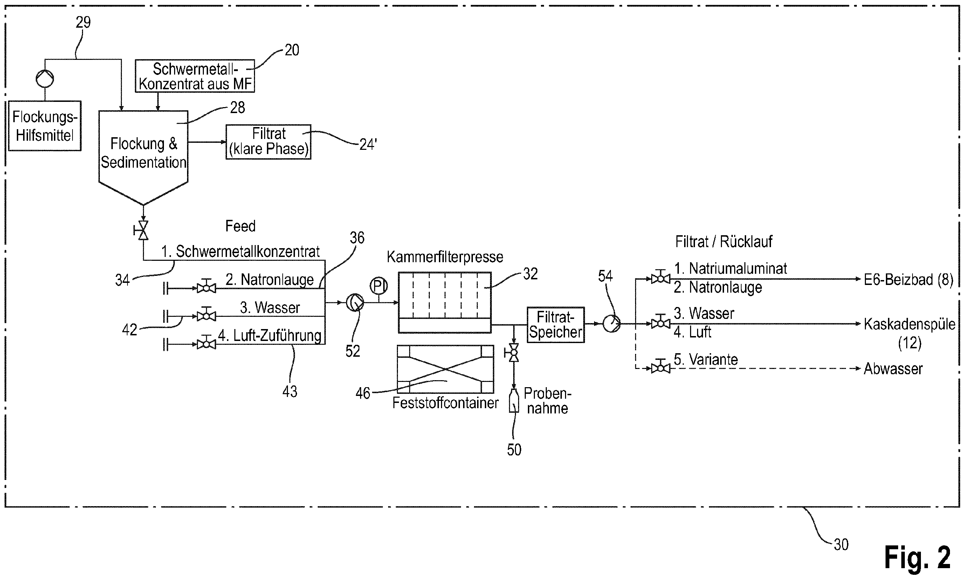

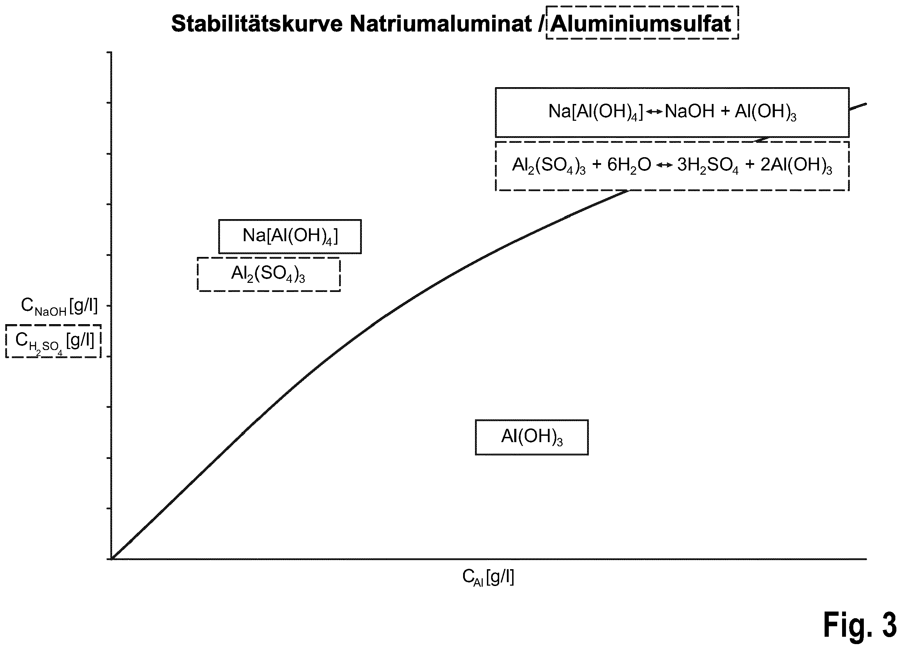

Figur 2 zeigt eine mögliche Ausführung der Pressfiltereinheit 30. Wie vorstehend erläutert, erfolgt in der Sedimentations-/Flotationseinheit 28 eine Sedimentation, wobei das entstehende Filtrat als klare Phase 24' entweder zum Ausgleichsbehälter 18 oder zur Weiterbehandlung geführt wird. In Figur 2 eingezeichnet ist auch die Zufuhr des Flockungshilfsmittels - dieser Stoffstrom ist mit dem Bezugszeichen 29 gekennzeichnet. Die Pressfiltereinheit 30 hat einen Mehrkammerpressfilter 32, dem das nach der Sedimentation vorliegende Konzentrat 34 oder das Schwermetallkonzentrat 20 aus der Membranfiltration direkt zugeführt wird. Der in den Filterkammern anfallende Kuchen hat einen Anteil an Natriumaluminat. Würde man nunmehr diesen Filterkuchen zum Neutralisieren direkt mit Wasser beaufschlagen, so würde gemäß der lediglich qualitativ eingezeichneten Stabilitätskurve von Natriumaluminat in Figur 3 Aluminiumhydroxid (Al(OH)₃) ausfallen.

In Figur 3 ist alternativ auch das Phasengleichgewicht für Aluminiumsulfat eingezeichnet, wobei für die Systeme Aluminiumsulfat, Natriumaluminat der Einfachheit halber die gleiche Stabilitätskurve eingezeichnet ist. Quantitativ unterscheiden sich natürlich die Stabilitätskurven dieser Systeme.

Das Ausfällen von Aluminiumhydroxid soll in der Schwermetallabscheidung verhindert werden. Erfindungsgemäß wird dies dadurch erreicht, dass dem Pressfilter über den Zulauf 36 aus einem NaOH-Speicher Natronlauge zugeführt wird. Dadurch wird das in der Restfeuchte des Filterkuchens vorhandene Natriumaluminat mittels NaOH ausgewaschen. Nachfolgend kann der Filterkuchen mit Wasser neutralgespült und die Natronlauge somit ausgewaschen werden. Das vorherige Auswaschen mit Natronlauge ist wichtig, um ein Ausfällen von Aluminium beim Neutralspülen zu verhindern. Das Wasser zum Neutralspülen wird aus einem Wasserspeicher über einen Wasserzulauf 42 zum Pressfilter geführt. Zur Beaufschlagung des Filterkuchens ist noch eine Luftzuführung 43 vorgesehen. Die Luftzuführung erfolgt zur Verdrängung der Flüssigphase zwischen den jeweiligen Spülstufen und am Ende vor der Entnahme des Filterkuchens (Entleeren des Pressfilters).

Gemäß dem Schema in Figur 2 wird der beim Pressfiltern anfallende, insbesondere Schwermetalle aufweisende Filterkuchen dann einem Feststoffspeicher 46, im vorliegenden Fall einem Feststoffcontainer, zugeführt, so dass diese Schwermetalle einer weiteren Verwendung als Wertstoff zuführbar sind. Das im Pressfilter 32 anfallende Filtrat enthält, wie erläutert, ein Natriumaluminat-/NaOH-Gemisch, das dann wie in Figur 2 angedeutet, entweder der weiteren Aufbereitung zuführbar oder in den Ausgleichsbehälter 18 bzw. direkt in das Beizbad 8 oder 10 zurückführbar ist. Das beim Spülen des Mehrkammerpressfilters anfallende Natronlauge/Wassergemisch kann beispielsweise zur Kaskadenspülung 12 zurückgeführt werden. Bei einer gestrichelt angedeuteten Variante der Pressfiltereinheit kann dieses Wasser auch als Abwasser behandelt werden.

In Figur 2 angedeutet ist auch eine Analysen- oder Probennahmestation 50, in der die Zusammensetzung des Filtrats geprüft werden kann. Der Transport der Stoffströme erfolgt über geeignete Fördermittel, wie beispielsweise Schlauchpumpen oder sonstige Fluidpumpen, die mit dem Bezugszeichen 52, 54 angedeutet sind. Auf die einzelnen Ventileinrichtungen zur Steuerung der Stoffströme soll hier nicht eingegangen werden. Mittels des vorbeschriebenen Anlagenteils werden somit die in der Beizlösung enthaltenen Schwermetalle abgeschieden und als Wertstoff einer weiteren Verwendung zugeführt. Das nach der Membranfilterstation 20, dem Pressfilter 32 und/oder der Sedimentations-/Flotationseinheit 28 anliegende Gemisch (Natriumaluminat/Natronlauge) kann dann gemäß Figur 1 einer Filtereinheit zugeführt werden, die beim dargestellten Ausführungsbeispiel als Nanofilter 56 ausgeführt ist. Mittels dieses Nanofilters 56 wird das bei der Abscheidung des Schwermetallkonzentrats übrig bleibende Gemisch aus Natronlauge und Natriumaluminat weiter gefiltert, so dass vergleichsweise reine Natronlauge über die Rückführleitung 58 zum Ausgleichsbehälter 18 zurückgeführt werden kann. Gemäß Figur 1 wird dann das aufkonzentrierte Natriumaluminat einer Ausfälleinheit 60 zugeführt. In dieser wird das Aluminat bekeimt, was zu einer Ausfällung von Aluminiumhydroxid (Al(OH)₃) führt. Die in der Ausfälleinheit 60 anfallende rückgewonnene Natronlauge wird dann über die weitere Rückführung 62 zum Ausgleichsbehälter 18 zurückgeführt.

Das alkalische Aluminiumhydroxid wird über eine Leitung 64 einer Fest-Flüssig-Trenneinheit 66 zugeführt, in der das Aluminiumhydroxid weiter angereichert wird, wobei die bei dieser Trennung anfallende NaOH-haltige flüssige Phase über die Flüssigphasenrückführung 68 zum Ausgleichsbehälter 18 zurückgeführt wird. Das anfallende Aluminiumhydroxid wird dann mit Wasser oder einer sonstigen geeigneten Flüssigkeit in einem Neutralisierer 70 durch Auswaschen oder Spülen neutralisiert. Das pH-neutrale Aluminiumhydroxid wird dann ggf. einem Trockner 72 zugeführt und dort weiter entfeuchtet. Das nach dieser Fest-Flüssig-Trennung anfallende reine Aluminiumhydroxid wird dann als Wertstoff in einen Hydroxidspeicher 74 zur Weiterverwertung bereitgestellt.

Die Aufbereitung des mit Aluminiumsulfat angereicherten Elektrolyten des Eloxalbades 14 erfolgt in entsprechender Weise. Ähnlich wie bei der Aufbereitung des Beizbades ist auch dem Eloxalbad ein Ausgleichsbehälter 76 (sauer) zugeordnet, in den der beladene Elektrolyt aus dem Eloxalbad 14 eingeleitet bzw. aus dem Elektrolyt zum Eloxalbad 14 hin abgezogen werden kann.

Das beim Anodisieren anfallende Aluminiumsulfat-Schwefelsäure-Gemisch wird wie in Figur 1 dargestellt, ähnlich wie bei der Aufbereitung der klaren Phase aus der Schwermetallabscheidung zunächst einer Filtereinheit, im vorliegenden Fall ebenfalls einer Nanofiltrationsanlage 78 zugeführt. Durch eine derartige Nanofiltration wird die freie Schwefelsäure vom Aluminiumsulfat abgetrennt und über eine Rückführleitung als Permeat 80 zum Ausgleichsbehälter 76 oder direkt in das Eloxalbad 14 zurückgeführt.

Alternativ kann auch ein Vorfilter und/oder eine Retardation vorgeschaltet sein. Bei der Retardation wird ein Anionenaustauscherharz im Aufstrom mit der verbrauchten Säure beaufschlagt. Die freie Säure diffundiert dabei größtenteils in das Harz während die Metalle das Harzbett weitgehend ungehindert passieren. Wird das Harzbett anschließend im Abstrom mit Wasser beaufschlagt, so wird die Säure wieder freigesetzt. Es entsteht eine Säurelösung mit geringem Metallgehalt, die wieder in das Prozessbad zurückgeführt wird. Die säurearme und aluminiumreiche Säurelösung, welche üblicherweise in eine Abwasserbehandlungsanlage geleitet wird, kann dann alternativ zum Eloxalsäureelektrolyten der Nanofiltration zugeführt werden. Der Anmelder behält sich vor, auf diese Alternative einen Patentanspruch zu richten.

Das als Konzentrat 81 verbleibende Aluminiumsulfat durchläuft dann Aufbereitungsschritte, die denjenigen bei der Beizbad-Aufbereitung entsprechen. Demgemäß wird das Konzentrat 81 (Aluminiumsulfat) einer Ausfällstation 82 zugeführt, in der das Sulfatkonzentrat unter weiterem Entzug von Schwefelsäure zur Ausfällung von Aluminiumhydroxid gebracht wird (siehe Stabilitätskurve von Aluminiumsulfat/Aluminiumhydroxid gemäß Figur 3). Die Schwefelsäure wird über eine Rückleitung 83 zurück zum Ausgleichsbehälter 76 oder in das Eloxalbad 14 geführt. Das saure Aluminiumhydroxid wird dann über eine Leitung 84 einer Fest-Flüssig-Trennstation 86 zugeführt. Die darin anfallende flüssige Phase (Schwefelsäure) wird dann über eine Rückführleitung 86 ebenfalls zum Ausgleichsbehälter 76 oder in das Eloxalbad 14 geführt. Das verbleibende aufkonzentrierte saure Aluminiumhydroxid wird entsprechend der parallelen Aufbereitung einem Neutralisierer 90 zugeführt und durch Spülen bzw. Auswaschen neutralisiert. Das dann pH-neutrale Aluminiumhydroxid wird dann ggf. dem bereits erläuterten Trockner 72 zugeführt und nach der Trocknung als Wertstoff im Hydroxidspeicher 74 aufgenommen. Prinzipiell kann auch ein eigener Speicher zur Aufnahme des im saueren Zweig anfallenden Aluminiumhydroxids vorgesehen werden.

Mit dem vorgestellten Verfahren können die Stoffkreisläufe in den einzelnen Bereichen (Beizen, Eloxieren) weitestgehend geschlossen werden, wobei eine Abzweigung von Schwermetallen vorgeschaltet werden kann. Der Beizprozess kann beispielsweise durch geeignete Einstellung der Badparameter (Konzentration der Natronlauge, des Aluminiums, Temperatur, Beizzeit) so stabilisiert werden, dass man ohne Zusatz von Additiven auskommt. Die Vorteile des erfindungsgemäßen Verfahrens liegen in der Verringerung der Verluste an Natronlauge, einer Reduzierung von Badadditiven beziehungsweise dem Auskommen ohne sonstige Badzusätze (zum Beispiel Zuckerderviate). Die Beizlösung ist aufgrund höherer Reinheit (keine Zuckerderivate, keine Sulfide, keine Schwermetalle und keine Schwermetallfällung im Bad) sehr stabil. Die kontrollierte Fällung von Aluminiumhydroxid wird durch Nichtvorhandensein von Zusatzstoffen begünstigt.

Des Weiteren können die Verluste an Schwefelsäure bei der Anodisierung verringert werden. Das Verfahren ermöglicht einen Kreislaufbetrieb und aufgrund eines geringen Neuchemieeinsatzes eine ressourcenschonende Anwendung.

Weitere Vorteile werden in der prozessintegrierten kontinuierlichen Aufbereitung, Reduzierung von Abwasserfrachten, in einer platzsparenden, kompakten Technologie, in kurzen Aufbereitungszeiten, in der Möglichkeit zur Vollautomatisierung und in der Erzeugung weitestgehend reiner vermarktungsfähiger Produkte/Wertstoffe gesehen.

Bei einer direkten Filtration der alkalischen Schwermetalllösungen oder der sonstigen Konzentrate kann es schwierig sein, einen festen Filterkuchen zu erhalten. Es wird daher bevorzugt, die Ausbildung eines derartig festen Filterkuchens durch Zugabe von Flockungsmitteln, Flockungshilfsmitteln oder sonstigen Filterhilfsmitteln zu stützen. Insbesondere bei der beschriebenen Pressfiltration muss daher auf die Dosierung der Flockungsmittel geachtet werden.

Bei der Nanofiltration ist darauf zu achten, dass nur so viel Natronlauge bzw. Schwefelsäure abgetrennt wird, dass es nicht schon bei der Filtration zum Ausfall von Aluminiumhydroxid kommt. Dies könnte zu einer Verblockung der Filtermembran und Verunreinigung der Anlage führen.

Für die Fest-Flüssig-Trennung ist vorzugsweise der Einsatz einer Hochdruck-Membrankammerfilterpresse vorgesehen.

Wie erläutert, sollte das Auswaschen des gepressten Filterkuchens über eine geeignete pH-Messung oder Konzentrationsbestimmung kontrolliert werden. Der Anfall von verdünnter Natronlauge bzw. Schwefelsäure ist im Hinblick auf den späteren Einsatz im Prozess (Beiz-, Eloxalbad oder Spülbäder) hin zu untersuchen. Beim Waschen des Filterkuchens sollte darauf geachtet werden, dass nur so viel Wasser verwendet wird, wie es für die Senkung des Gehaltes an Natronlauge bzw. Schwefelsäure im Endprodukt für die Verwertung erforderlich ist.

Wie erläutert, erfolgt die erfindungsgemäße Aufbereitung sowohl im alkalischen als auch im sauren Zweig der Anlage. Prinzipiell möglich ist es jedoch auch, die beschriebene Aufbereitung zunächst nur in einem der Zweige vorzusehen und dann bei einem späteren Ausbau der Anlage auch den anderen Zweig in der beschriebenen Weise mit einer Aufbereitung des jeweiligen Bades (Beizbad/Eloxalbad) nachzurüsten.

Offenbart sind ein Verfahren zum Aufbereiten eines Beiz- und/oder Eloxalbades sowie eine Eloxieranordnung mit einer Beizanlage und einer Eloxalanlage, bei denen ein alkalisches Beizbad oder ein saueres Eloxalbad so aufbereitet wird, dass die Beizlösung bzw. der Elektrolyt zum Prozess zurückgeführt werden und Aluminiumhydroxid und ggf. Schwermetalle als Wertstoff anfallen. Das Beizverfahren kommt ohne Komplexbildner (Zuckerderivate) für die Komplexierung von Aluminium und ohne Fällung von Schwermetallen (insbesondere Zink) im Beizbad aus. Die direkte Zugabe von Fällmitteln im Beizbad entfällt.

### Bezugszeichenliste:

- 1: Eloxieranordnung
- 2: Aufbereitung
- 4: Beizanlage
- 6: Eloxalanlage
- 8: E6-Beizbad
- 10: EO-Beizbad
- 12: Kaskadenspüle alkalisch
- 14: Eloxalbad
- 16: Kaskadenspüle sauer
- 18: Niveau-Ausgleichsbehälter (alkalisch)
- 20: Membranfilterstation
- 22: Konzentrat
- 24: klare Phase
- 26: Rückführung klare Phase (feststofffreie Lösung)
- 28: Sedimentations-/Flotationseinheit
- 29: Flockungshilfsmittel
- 30: Pressfiltereinheit
- 32: Mehrkammerpressfilter
- 34: Konzentratzulauf
- 36: NaOH-Zulauf
- 42: Wasserzulauf
- 43: Luftzuführung
- 44: Konzentratleitung
- 46: Konzentratspeicher
- 48: Zwischenspeicher
- 50: Analysen- / Probennahmestation
- 52: Pumpe
- 54: Pumpe
- 56: Nanofilter
- 58: Rückführleitung
- 60: Ausfällstation
- 62: Rückführleitung
- 64: Leitung
- 66: Fest-Flüssig-Trennstation
- 68: NaOH-Rückführung
- 70: Neutralisierer
- 72: Trockner
- 74: Hydroxidspeicher
- 76: Niveau-Ausgleichsbehälter (sauer)
- 78: Nanofiltrationsanlage
- 80: Permeat
- 81: Konzentrat
- 82: Ausfällstation
- 83: Stoffleitung
- 84: Leitung
- 86: Fest-Flüssig-Trennung
- 88: Rückführung
- 90: Neutralisierung

## Patentansprüche

1. Verfahren zum Aufbereiten eines alkalischen, NaOH-haltigen Beizbades und eines sauren, vorzugsweise schwefelsäurehaltigen Eloxalbades (14) mit den Schritten:
- Abziehen einer Teilmenge des mit Aluminiumverbindungen angereicherten Bades;
- Nanofiltrieren der Teilmenge zum Trennen in eine aluminiumreiche Phase und eine aluminiumarme Phase;
- Ausfällen einer sauren bzw. alkalischen aluminiumhydroxidreichen Phase aus der aluminiumreichen Phase, wobei das Ausfällen vorzugsweise durch Bekeimen erfolgt;
- Abtrennen von alkalischem bzw. saurem Aluminiumhydroxid aus der aluminiumhydroxidreichen Phase mittels Fest-Flüssig-Trennung;
- Neutralisieren des Aluminiumhydroxids, wobei die nach einem Neutralspülen aus dem sauren und dem alkalischen Bad anfallenden Feststoffe zusammengeführt werden;
- gemeinsames Trocknen zu einem Aluminiumhydroxidfeststoff und
- Rückführen der bei der Nanofiltration anfallenden aluminiumarmen Phase und/oder einer beim Ausfällen/Bekeimen und/oder bei der Fest-Flüssig-Trennung anfallenden flüssigen Phase zur Teilmenge oder in das jeweilige Bad, wobei die rückgeführte Phase Säure, vorzugsweise Schwefelsäure bzw. NaOH enthält.

2. Verfahren nach Patentanspruch 1, wobei der Filtration der Teilmenge des alkalischen Beizbades eine Membranfiltration vorgeschaltet ist, in der das Beizbad in ein schwermetallhaltiges Konzentrat und eine laugenhaltige, NaOH-haltige klare Phase getrennt wird, die als aluminiumangereicherte Phase der Filtration, insbesondere der Nanofiltration zugeführt wird.

3. Verfahren nach Patentanspruch 2, wobei aus dem Konzentrat Schwermetalle durch Sedimentation/Flotation und/oder Filtration, vorzugsweise Pressfiltration abgetrennt werden, wobei eine Auswaschung von Natriumaluminat aus einem Filterkuchen erfolgt und anschließend der Filterkuchen gespült wird, wobei das Auswaschen mittels NaOH und/oder das Neutralspülen mit Wasser erfolgt.

4. Verfahren nach einem der vorhergehenden Patentansprüche, wobei dem Beizbad keine Zuckerderivate oder glucosehaltigen Additive zur Stabilisierung zugegeben werden.

5. Verfahren nach einem der vorhergehenden Patentansprüche, wobei der Nanofiltration ein Vorfilter und/oder eine Retardation vorgeschaltet ist.

6. Eloxieranordnung zur Durchführung des Verfahrens nach einem der vorhergehenden Patentansprüche, mit einer Beizanlage (4), die ein alkalisches, NaOH-haltiges Beizbad hat, das in einem Beizbadbehälter (8) aufgenommen ist und mit einer Eloxalanlage (6), die ein saures, vorzugsweise schwefelsäurehaltiges Eloxalbad (14) aufweist, das in einem Eloxalbadbehälter aufgenommen ist, sowie jeweils eines Nanofilters (56, 78) zur Filtration eines in der Beizanlage (4) bzw. in der Eloxalanlage (6) anfallenden, mit einer Aluminiumverbindung angereicherten Bades, jeweils einer Ausfällstation (60, 82) zum Ausfällen von Aluminiumhydroxid, jeweils einer Fest-Flüssig-Trennung (66, 86) für die aluminiumhydroxidhaltige Phase, jeweils einem Neutralisierer (70, 90) zum Neutralisieren des Aluminiumhydroxids und jeweils einer Rückführung zum Rückführen der bei der Nanofiltration anfallenden aluminiumarmen Phase und/oder einer beim Ausfällen/Bekeimen und/oder bei der Fest-Flüssig-Trennung anfallenden flüssigen Phase zur jeweiligen Teilmenge oder in das jeweilige Bad, wobei die rückgeführte Phase NaOH bzw. Säure, vorzugsweise Schwefelsäure enthält, und mit einem gemeinsamen Trockner (72) zum Trocknen des Aluminiumhydroxids und mit einem gemeinsamen Speicher (74) zur Aufnahme des aus dem Eloxalbad bzw. dem Beizbad anfallenden getrockneten Aluminiumhydroxids.

7. Anordnung nach Patentanspruch 6, wobei dem Nanofilter (56) ein Membranfilter zum Trennen des Beizbades in ein schwermetallhaltiges Konzentrat und eine laugenhaltige, NaOH-haltige klare Phase vorgeschaltet ist, insbesondere zusätzlich mit einer Filteranlage zum Abtrennen von Schwermetallen aus dem Konzentrat.

8. Anordnung nach Patentanspruch 7, wobei die Filteranlage mit einem Zulauf von NaOH zum Auswaschen von Natriumaluminat aus einem in der Filteranlage anfallenden Filterkuchen und/oder einem Zulauf von Wasser zum Neutralspülen des Filterkuchens ausgestattet ist.

9. Anordnung nach Patentanspruch 7 oder 8, wobei die Filteranlage eine Pressfiltereinheit (30) ist.

## Claims

1. Method for conditioning an alkaline, NaOH-containing pickling bath and an acidic, preferably sulphuric acid-containing anodising bath (14) having the steps:
- removing a partial quantity of the bath enriched with aluminium compounds;
- nanofiltering the partial quantity in order to separate it into an aluminium-rich phase and an aluminium-poor phase;
- precipitating an acidic or alkaline aluminium hydroxide-rich phase out of the aluminium-rich phase, wherein the precipitation is carried out preferably by means of seeding;
- separating-off alkaline or acidic aluminium hydroxide out of the aluminium hydroxide-rich phase by means of solid-liquid-separation;
- neutralising the aluminium hydroxide, wherein the solids generated from the acidic and the alkaline bath after a neutral rinsing are combined;
- shared drying to form an aluminium hydroxide solid and
- returning the aluminium-poor phase generated in the nanofiltration and/a liquid phase generated in the precipitation/seeding and/or in the solid-liquid separation to the partial quantity or into the respective bath, wherein the returned phase includes acid, preferably sulphuric acid or NaOH.

2. Method according to claim 1, wherein upstream of the filtering of the partial quantity of the alkaline pickling bath is arranged a membrane filtration in which the pickling bath is separated into a heavy metal-containing concentrate and an alkali-containing, NaOH-containing clear phase, which is supplied to the filtration, in particular the nanofiltration as an aluminium-enriched phase of the filtration.

3. Method according to claim 2, wherein heavy metals are separated out of the concentrate by means of sedimentation/flotation and/or filtration, preferably press filtration, wherein sodium aluminate is eluted out of a filter cake and subsequently the filter cake is washed, wherein the elution is carried out by means of NaOH and/or the neutral rinsing is carried out with water.

4. Method according to any of the preceding claims, wherein no sugar derivatives or glucose-containing additives for stabilisation are added to the pickling bath.

5. Method according to any of the preceding claims, wherein a prefilter and/or a retardation is arranged upstream of the nanofiltration.

6. Anodising assembly for carrying out the method according to any of the preceding claims, having a pickling apparatus (4) which has an alkaline, NaOH-containing pickling bath, which is accommodated in a pickling bath container (8), and having an anodising apparatus (6) which has an acidic, preferably sulphuric acid-containing anodising bath (14), which is accommodated in an anodising bath container, as well as respectively one nanofilter (56, 78) for filtering a bath which is enriched with aluminium compound and generated in the pickling apparatus (4) or in the anodising apparatus (6), respectively one precipitation station (60, 82) for precipitating aluminium hydroxide, respectively one solid-liquid separation (66, 86) for the aluminium hydroxide-containing phase, respectively one neutraliser (70, 90) for neutralising the aluminium hydroxide and respectively one returner for returning the aluminium-poor phase generated at the nanofiltration and/or a liquid phase generated at the precipitation/seeding and/or at the solid-liquid separation to the respective partial quantity or into the respective bath, wherein the returned phase includes NaOH or acid, preferably sulphuric acid, and having a shared dryer (72) for drying the aluminium hydroxide and having a shared store (74) for the reception of the dried aluminium hydroxide generated at the anodising bath or the pickling bath.

7. Assembly according to claim 6, wherein a membrane filter for separating the pickling bath into a heavy metal-containing concentrate and an alkali-containing NaOH-containing clear phase is arranged upstream of the nanofilter (56), in particular in addition having a filter apparatus for separating heavy metals out of the concentrate.

8. Assembly according to claim 7, wherein the filter apparatus is equipped with a feed of NaOH for leaching sodium aluminate from a filter cake generated in the filter apparatus and/or a feed of water for the neutral rinsing of the filter cake.

9. Assembly according to claim 7 or 8, wherein the filter apparatus is a press filter unit (30).

## Revendications

1. Procédé de préparation d'un bain de décapage alcalin contenant du NaOH et d'un bain d'anodisation acide, de préférence contenant de l'acide sulfurique (14), avec les étapes consistant à :
- retirer une quantité partielle du bain enrichi en composés d'aluminium ;
- soumettre la quantité partielle à une nanofiltration pour une séparation en une phase riche en aluminium et une phase pauvre en aluminium ;
- précipiter une phase acide ou alcaline riche en hydroxyde d'aluminium à partir de la phase riche en aluminium, dans lequel la précipitation est effectuée de préférence par ensemencement ;
- séparer l'hydroxyde d'aluminium alcalin ou acide de la phase riche en hydroxyde d'aluminium au moyen d'une séparation solide-liquide ;
- neutraliser l'hydroxyde d'aluminium, dans lequel les solides obtenus à partir du bain alcalin et du bain acide après un rinçage neutre sont fusionnés ;
- sécher en commun pour obtenir un solide d'hydroxyde d'aluminium, et
- recycler la phase pauvre en aluminium obtenue via la nanofiltration et/ou une phase liquide obtenue par précipitation/ensemencement et/ou par séparation solide-liquide pour une quantité partielle ou dans le bain respectif, dans lequel la phase recyclée inclut un acide, de préférence de l'acide sulfurique ou du NaOH.

2. Procédé selon la revendication 1, dans lequel la filtration de la quantité partielle du bain de décapage alcalin est précédée d'une filtration sur membrane, durant laquelle le bain de décapage est séparé en un concentré contenant un métal lourd et une phase claire contenant du NaOH alcaline, qui est alimentée sous la forme d'une phase enrichie en aluminium de la filtration, en particulier de la nanofiltration.

3. Procédé selon la revendication 2, dans lequel des métaux lourds sont séparés du concentré par sédimentation/flottation et/ou filtration, de préférence par filtration sous pression, dans lequel une lixiviation d'aluminate de sodium est effectuée à partir d'un gâteau de filtration et ensuite le gâteau de filtration est rincé, dans lequel la lixiviation est effectuée avec du NaOH et/ou le rinçage neutre est effectué avec de l'eau.

4. Procédé selon l'une des revendications précédentes, dans lequel aucun dérivé de sucre ou additif contenant du glucose n'est ajouté pour une stabilisation du bain de décapage.

5. Procédé selon l'une des revendications précédentes, dans lequel la nanofiltration est précédée d'un préfiltre et/ou d'un retardateur.

6. Agencement d'anodisation pour la mise en oeuvre du procédé selon l'une quelconque des revendications précédentes, comportant une installation de décapage (4) qui a un bain de décapage alcalin contenant du NaOH, qui est logé dans un récipient de bain de décapage (8), et comportant une installation d'anodisation (6), qui présente un bain d'anodisation acide (14), contenant de préférence de l'acide sulfurique, qui est logé dans un récipient de bain d'anodisation et, respectivement, un nanofiltre (56, 78) pour une filtration d'un bain enrichi en composé d'aluminium obtenu dans l'installation de décapage (4) ou dans l'installation d'anodisation (6), une station de précipitation (60, 82) pour une précipitation d'hydroxyde d'aluminium, une séparation solide-liquide (66, 86) pour la phase contenant de l'hydroxyde d'aluminium, un agent neutralisant (70, 90) pour une neutralisation de l'hydroxyde d'aluminium et un recyclage pour un recyclage de la phase pauvre en aluminium obtenue par nanofiltration et/ou d'une phase liquide obtenue par précipitation/ensemencement et/ou par séparation solide-liquide pour la quantité partielle respective ou dans le bain respectif, dans lequel la phase recyclée inclut du NaOH ou un acide, de préférence de l'acide sulfurique, et comporte un sécheur commun (72) pour sécher l'hydroxyde d'aluminium et un stockage commun (74) pour recevoir l'hydroxyde d'aluminium séché obtenu par le bain d'anodisation ou le bain de décapage.

7. Agencement selon la revendication 6, dans lequel le nanofiltre (56) est précédé d'un filtre à membrane pour séparer le bain de décapage en un concentré contenant des métaux lourds et une phase claire alcaline contenant du NaOH, en particulier en outre une installation de filtrage pour séparer les métaux lourds du concentré.

8. Agencement selon la revendication 7, dans lequel l'installation de filtrage est équipée d'une entrée de NaOH pour le lavage de l'aluminate de sodium à partir d'un gâteau de filtration obtenu dans l'installation de filtration et/ou d'une entrée d'eau pour le rinçage neutre du gâteau de filtration.

9. Agencement selon la revendication 7 ou 8, dans lequel l'installation de filtrage est une unité de filtre à pression (30).
